# FASCICULE DE BREVET EUROPEEN

(11) **EP 4 416 411 B1**
(45) Date de publication et mention de la délivrance du brevet: **12.11.2025**
(21) Numéro de dépôt: 22802017.8
(22) Date de dépôt: 04.10.2022
(51) Int. Cl.: F16H 57/031, F16H 57/039, F16H 63/34, H02K 7/116, H02K 5/22, H02K 11/33, H02K 29/08, F16H 57/02

(54) **ACTIONNEUR POUR UN SYSTÈME DE VERROUILLAGE EN STATIONNEMENT D' UNE BOÎTE DE VITESSES DE VÉHICULE**
AKTUATOR FÜR EIN PARKSPERRENSYSTEM EINES FAHRZEUGGETRIEBES
ACTUATOR FOR A PARKING LOCK SYSTEM OF A VEHICLE GEARBOX

(30) Priorité: 12.10.2021 FR 2110802
(43) Date de publication de la demande: 21.08.2024
(73) Titulaire: Valeo Electrification, 95800 Cergy (FR)
(72) Inventeur: LANOE, Thierry, 95892 CERGY PONTOISE (FR); GAUTIER, Sylvain, 95892 CERGY PONTOISE (FR)
(86) Numéro de dépôt international: PCT/EP2022/077545
(87) Numéro de publication internationale: WO 2023/061800

(56) Documents cités:
- CN-A- 109 139 875
- FR-A1- 2 725 854
- US-A1- 2020 336 037

## Description

L'invention concerne un actionneur pour un système de verrouillage en stationnement d'une boîte de vitesses de véhicule, notamment un véhicule automobile équipée d'une boîte de vitesses automatique. Ce système de verrouillage est mieux connu par son terme en anglais « *park-lock »* ou « *parking lock* ».

Un tel actionneur permet le blocage en stationnement de la boîte de vitesses au moyen d'un levier venant en prise avec une denture de la boîte de vitesses.

Un actionneur du même type est connu du document US 2019136960 AA. Dans ce document, l'actionneur comprend un moteur électrique traditionnel à balais. Un inconvénient de ce type de moteur électrique à balais est que les balais ont tendance à coller au collecteur lorsque le moteur n'est pas sollicité pendant une longue période, ce qui peut engendrer un fonctionnement dégradé de l'actionneur. Le document CN 109 139 875 A décrit aussi un actionneur pour un système de verrouillage en stationnement d'une boîte de vitesses de véhicule.

Un système de verrouillage en stationnement d'une boîte de vitesses de véhicule n'est sollicité que très peu de temps, il est ainsi préférable de ne pas utiliser de moteur électrique à balais pour éviter le désagrément mentionné ci-dessus.

De plus, la compacité de ce type d'actionneur est un critère particulièrement important pour les constructeurs automobiles, il est ainsi souhaité que les actionneurs de système de verrouillage en stationnement d'une boîte de vitesses de véhicule soient compacts et légers.

La présente invention a pour objet un actionneur pour un système de verrouillage en stationnement d'une boîte de vitesses améliorant les solutions actuelles tout en répondant aux critères de compacité et de poids.

Plus particulièrement, l'invention concerne un actionneur pour un système de verrouillage en stationnement d'une boîte de vitesses de véhicule, ledit actionneur comprend un moteur électrique pourvu de bobines statoriques, d'un rotor et d'un arbre de sortie lié au rotor et s'étendant selon un axe X, un mécanisme réducteur ayant un élément de sortie de couple rotatif de manière à pouvoir tourner entre une position de verrouillage et une position de libération, ledit mécanisme réducteur étant cinématiquement lié à l'arbre de sortie du moteur électrique. Le moteur électrique est de type à courant continu sans balais et l'actionneur comprend une première carte électronique et une seconde carte électronique, ladite seconde carte électronique comprend un dispositif de détermination de la position du rotor du moteur électrique.

Le terme boîte de vitesses désigne également un réducteur associé à un moteur électrique dans le cas d'un véhicule électrique.

Ainsi, l'utilisation d'un moteur électrique de type à courant continu sans balais (en anglais « *brushless* ») permet de s'affranchir des problèmes de collage des balais au collecteur lors de période d'inutilisation. De plus, l'agencement d'un actionneur avec deux cartes électroniques permet une compacité de l'actionneur tout en alliant un pilotage performant du moteur électrique. Les deux cartes électroniques sont distinctes.

Avantageusement, le mécanisme réducteur comprend une vis sans fin positionnée sur l'arbre de sortie du moteur électrique et engrène avec une roue dentée sur laquelle se trouve l'élément de sortie de couple.

Selon l'invention, la première carte électronique s'étend dans un plan P1 sensiblement parallèle à l'axe X et la seconde carte électronique s'étend dans un plan P2 sensiblement perpendiculaire à l'axe X.

Avantageusement, la première carte électronique et la seconde carte électronique sont reliées électriquement par l'intermédiaire d'un élément de connexion en forme de « L ».

Avantageusement, au moins un aimant multi-pôles, de préférence quatre pôles, est fixé sur l'arbre de sortie du moteur électrique. Le dispositif de détermination de la position du rotor du moteur électrique de seconde carte électronique comprend au moins un capteur de phase, de préférence trois capteurs, situé au regard de l'aimant multi-pôles afin d'assurer la commutation électronique de l'alimentation des bobines statoriques du moteur électrique.

Avantageusement, la première carte électronique comprend un capteur de position au regard de l'élément de sortie de couple afin de déterminer sa position angulaire.

Avantageusement, la seconde carte électronique comprend des broches d'alimentation, de préférence trois broches, afin d'alimenter électriquement les bobines statoriques du moteur électrique afin d'alimenter électriquement les bobines statoriques du moteur électrique.

De manière préférentielle, la seconde carte électronique comprend une ouverture au travers de laquelle passe l'arbre de sortie du moteur électrique. Cette ouverture peut avoir un contour ouvert ou fermé.

Avantageusement, le moteur électrique, l'arbre de sortie du moteur électrique, le mécanisme réducteur, la première carte électronique et la seconde carte électronique sont logés dans un boîtier monobloc. Le boîtier est avantageusement réalisé dans une matière plastique afin de rendre l'actionneur le plus léger possible. De manière alternative, le boîtier peut être réalisé en métal, par exemple en aluminium.

De préférence, le boîtier définit un premier volume dans lequel est logé le moteur électrique et un second volume dans lequel sont logés le mécanisme réducteur en liaison cinématique avec le moteur électrique et les deux cartes électroniques. De manière préférée, le premier volume est fermé au moyen d'un premier capot et le second volume est fermé au moyen d'un second capot. De ce fait, l'assemblage de l'actionneur est facilité car le moteur électrique est inséré dans propre logement, ensuite les éléments restants, c'est-à-dire le mécanisme réducteur et les deux cartes électroniques sont insérés dans leur propre logement et les deux logements sont finalement fermés par leurs capots respectifs.

Selon une caractéristique additionnelle de l'invention, la première carte électronique est fixée au boîtier par l'intermédiaire de vis de fixation et la seconde carte électronique est fixée au boîtier par l'intermédiaire d'au moins une glissière issue du boîtier.

Avantageusement, le boîtier comprend un connecteur électrique permettant de connecter électriquement la première carte électronique et la seconde carte électronique à une source d'alimentation électrique externe.

D'autres caractéristiques et avantages de l'invention ressortiront à la lecture qui suit d'un exemple de réalisation détaillé, en référence aux figures annexées :
La [Figure 1] représente une vue en perspective de l'actionneur selon l'invention ;
La [Figure 2] représente une vue en coupe partielle du boîtier de l'actionneur selon la [Figure 3] ;
La [Figure 3] représente une vue en perspective de l'agencement du moteur électrique et des deux cartes électroniques ;
La [Figure 4] représente une vue en perspective de l'agencement du moteur électrique et des deux cartes électroniques selon un autre point de vue ;
La [Figure 5] représente une vue en perspective de l'actionneur selon l'invention sans le capot ni la première carte électronique.

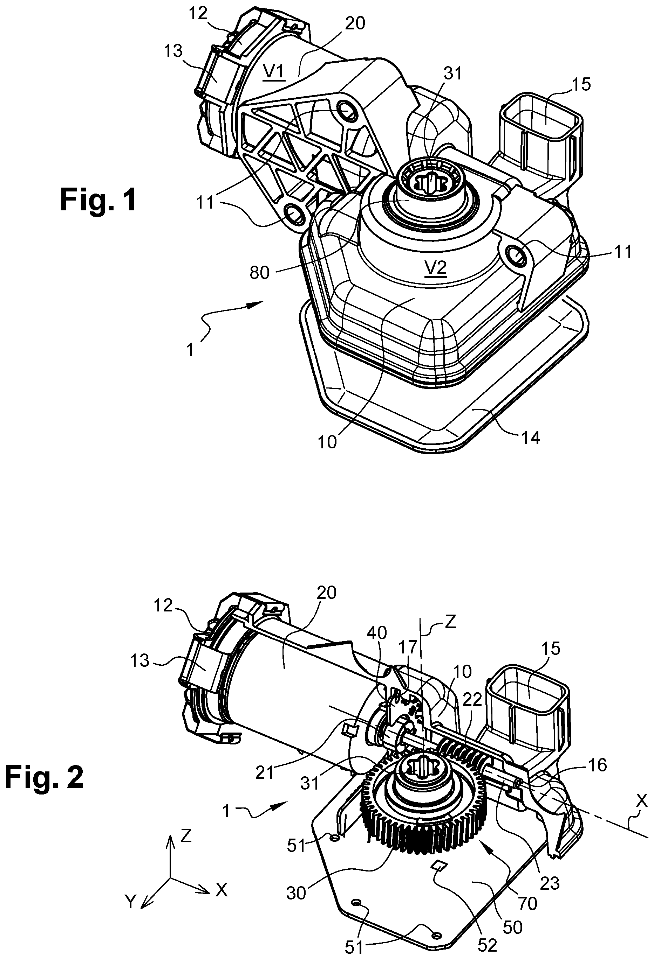

La figure 1 représente un actionneur 1 de système de verrouillage en stationnement d'une boîte de vitesses selon l'invention. Plus précisément cet actionneur 1 comprend un boîtier 10 monobloc composé d'un premier volume V1 et d'un second volume V2.

Dans le premier volume V1 de forme tubulaire se trouve un moteur électrique 20 de type à courant continu sans balais, ce moteur électrique comprend un arbre de sortie 23. Dans le second volume V2 de forme parallélépipédique se trouvent principalement un mécanisme réducteur 70 en liaison cinématique avec le moteur électrique 20 et deux cartes électroniques 40, 50. Le premier volume V1 est fermé au moyen d'un premier capot 12 et le second volume V2 est fermé au moyen d'un second capot 14. Le premier capot 12 est fixé au boîtier 10 par l'intermédiaire de clips 13 métalliques. Le second capot 14 est fixé au boîtier 10 par tout moyen de fixation classique, par exemple des vis.

Comme cela sera expliqué en référence aux figures suivantes, le mécanisme réducteur 70 comprend une vis sans fin 22 positionnée sur l'arbre de sortie 23 du moteur électrique 20 et engrène avec une roue dentée 30 sur laquelle se trouve l'élément de sortie de couple 31. Cet élément de sortie de couple 31 est réalisé sous la forme d'un arbre concentrique à la roue dentée 30 dont l'extrémité a la forme d'une prise femelle en étoile dans laquelle est apte à venir une tige d'actionnement (non représentée) d'un système de verrouillage de sorte à verrouiller ou déverrouiller une denture de la boîte de vitesses (non représentée) via un levier d'actionnement (non représenté). Da manière alternative, l'élément de sortie de couple 31 peut être réalisé sous la forme d'une prise mâle. Cet élément de sortie de couple 31 est guidé en rotation par un fût 80 du boîtier 10. Un moyen d'étanchéité est positionné dans ce fût 80 afin d'assurer que des polluants externes n'entrent à l'intérieur de l'actionneur 1. De manière similaire, un moyen d'étanchéité est prévu entre le capot 14 et le boîtier 10 et entre le capot 12 et le boîtier 10.

Le boîtier 10 comprend également un connecteur électrique 15 permettant de connecter électriquement les composants internes à l'actionneur 1.

Des moyens de fixation 11 sous la forme d'inserts métalliques sont disposés à plusieurs endroits du boîtier 10 afin de pouvoir le fixer à la boîte de vitesse du véhicule. Dans le cas présent, trois inserts 11 sont prévus.

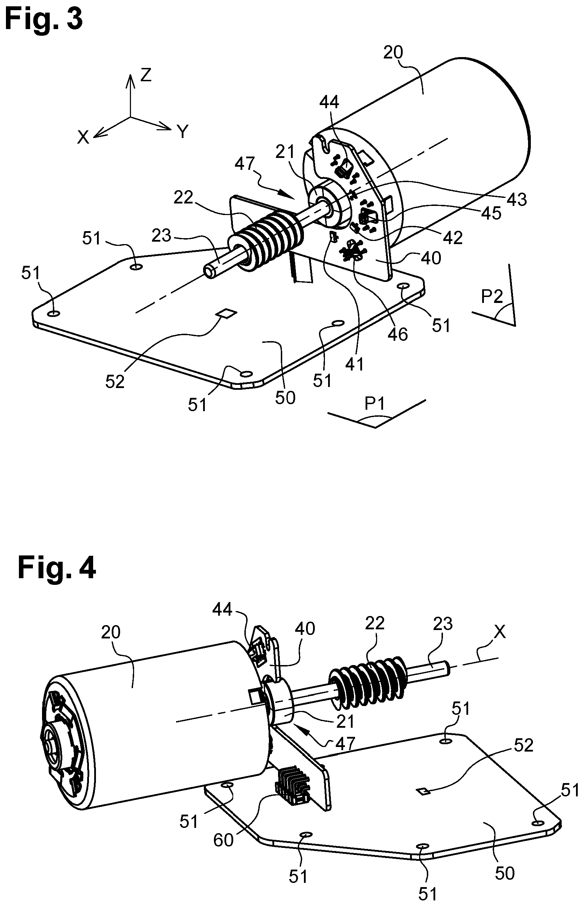

Sur la figure 2, on a illustré un repère X, Y, Z. La direction ou axe X correspond à une direction longitudinale. La direction ou axe Y, transversale, est définie comme étant perpendiculaire à la direction longitudinale X. Plus spécifiquement, les directions longitudinale et transversale X et Y peuvent par exemple appartenir sensiblement à un plan P1 (visible en figure 3) sensiblement horizontal. La direction ou axe Z correspond quant à elle à une direction verticale. Plus spécifiquement, les directions transversale et verticale Y et Z peuvent par exemple appartenir sensiblement à un plan P2 (visible en figure 3) sensiblement vertical.

Cette figure montre plus précisément l'intégration du moteur électrique 20 et du mécanisme réducteur 70 dans le boîtier 10.

Le moteur électrique 20 de type à courant continu sans balais est pourvu de bobines statoriques, d'un rotor et d'un arbre de sortie 23 lié au rotor et s'étendant selon un axe X. Les bobines statoriques formant le stator du moteur électrique sont au nombre de trois.

Un aimant 21 multi-pôles est fixé sur l'arbre de sortie 23 du moteur électrique 20. L'aimant 21 est de forme annulaire et est coaxial à l'arbre de sortie 23. L'aimant 21 a quatre pôles. Bien entendu, l'aimant 21 peut avoir un nombre différent de pôles.

Le mécanisme réducteur 70 comprend une vis sans 22 fin positionnée sur l'arbre de sortie 23 du moteur électrique 20 et engrène avec une roue dentée 30 sur laquelle se trouve l'élément de sortie de couple 31. L'élément de sortie de couple 31 s'étend selon un axe Z. L'extrémité de l'arbre de sortie 23 opposée au moteur électrique 20 est guidée en rotation dans un logement 16 du boîtier et sert ainsi de palier.

Le boîtier reçoit également la première carte électronique 50 et la seconde carte électronique 40.

La première carte électronique 50, qui est la carte électronique principale de l'actionneur, permet la gestion électronique de l'actionneur et intègre des composants électroniques nécessaires au fonctionnement du moteur électrique tels que non limitativement, au moins une capacité, au moins une résistance, au moins une unité centrale de traitement (CPU), un capteur 52 de position angulaire de l'élément de sortie de couple 31. La première carte électronique 50 a une forme sensiblement complémentaire à la forme de la périphérie du second volume V2 du boîtier 10. Le capteur 52 de position angulaire est un capteur a effet Hall. La première carte électronique 50 est fixée au boîtier 10 par l'intermédiaire des ouvertures 51 situées à sa périphérie.

La seconde carte électronique 40 comprend au moins un dispositif de détermination de la position du rotor du moteur électrique situé au regard de l'aimant multi-pôles 21 afin de fournir un signal nécessaire à la commutation électronique de l'alimentation des bobines statoriques du moteur électrique 20.

La figure 3 montre plus précisément l'agencement du moteur électrique 20 et des deux cartes électroniques 50, 40. La première carte électronique 50 s'étend dans un plan P1 sensiblement parallèle à l'axe X et la seconde carte électronique 40 s'étend dans un plan P2 sensiblement perpendiculaire à l'axe X. L'aimant multi-pôles 21 s'étend dans le même plan P2. La seconde carte électronique 40 a une forme sensiblement de « U » avec une jambe du « U » plus grande que l'autre. Ladite plus grande jambe est cette faisant face à la première carte électronique 50. La seconde carte électronique 40 comprend une ouverture 47 au travers de laquelle passe l'arbre de sortie 23 du moteur électrique 20. L'aimant multi-pôles 21 se trouve également dans l'ouverture 47.

Le dispositif de détermination de la position du rotor du moteur électrique 20 de seconde carte électronique 40 comprend au moins un capteur de phase 41, 42, 43, situé au regard de l'aimant multi-pôles 21 afin d'assurer la commutation électronique de l'alimentation des bobines statoriques du moteur électrique 20. Plus précisément, trois capteurs 41, 42, 43 sont répartis sur la seconde carte électronique 40 de manière concentrique à l'axe X. Ces trois capteurs 41, 42, 43 entourent ainsi l'aimant multi-pôles 21. Ces trois capteurs sont de type à effet Hall.

La seconde carte électronique 40 comprend également des broches d'alimentation 44, 45, 46, afin d'alimenter électriquement les bobines statoriques du moteur électrique 20. Ces broches 44, 45, 46 sont au nombre de trois et permettent ainsi d'alimenter trois bobines statoriques du moteur électrique 20. Ces trois broches 44, 45, 46 sont réparties sur la seconde carte électronique 40 de manière concentrique à l'axe X de manière alternée avec les trois capteurs 41, 42, 43.

La figure 4 permet de visualiser la connexion entre les deux cartes électroniques 50, 40. La première carte électronique 50 et la seconde carte électronique 40 sont reliées électriquement par l'intermédiaire d'un élément de connexion 60 en forme de « L ».

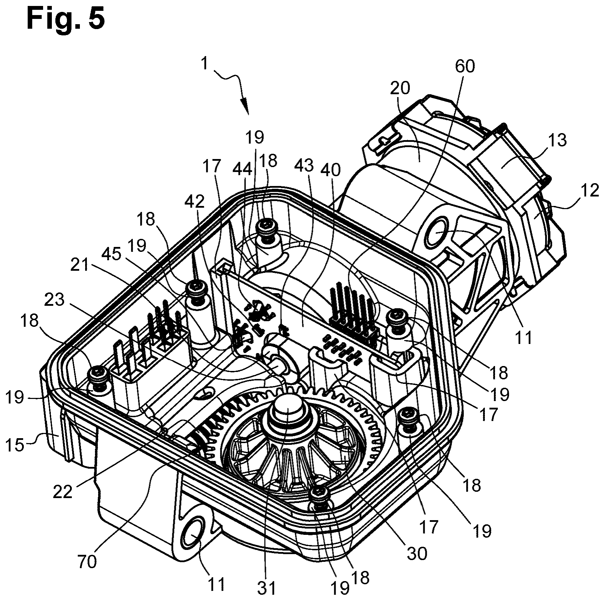

La figure 5 montre l'actionneur 1 sans le capot 14 ni la première carte électronique 50. Néanmoins les vis de fixation 18 permettant de fixer la première carte électronique 50 sont visibles. Ces vis de fixation 18 passent au travers des ouvertures 51 de la première carte électronique 50. La première carte électronique 50 repose sur des pions 19 du boîtier 10 et les vis de fixation 18 viennent se visser dans ces pions 19.

La figure 5 montre également en détail la fixation de la seconde carte électronique 40. Cette seconde carte électronique 40 est fixée au boîtier 10 par l'intermédiaire de glissières 17 issue du boîtier 10. Dans le cas présent, deux glissières sont nécessaires et réparties aux extrémités transversales de la seconde carte électronique 40.

Le boîtier 10 présente également une cavité dans laquelle vient se loger la roue dentée 30 et cette cavité épouse sensiblement la forme de la roue dentée 30.

Sur cette figure 5 est également visible l'extrémité opposée de l'arbre de l'élément de sortie de couple 31, cette extrémité de l'arbre se trouve au regard du capteur de position 52 angulaire de la première carte électronique 50.

Bien que l'invention ait été décrite en liaison avec un mode de réalisation particulier, il est bien évident qu'elle n'y est nullement limitée et qu'elle comprend tous les équivalents techniques des moyens décrits.

Dans les revendications, tout signe de référence entre parenthèses ne saurait être interprété comme une limitation de la revendication.

## Revendications

1. Actionneur (1) pour un système de verrouillage en stationnement d'une boîte de vitesses de véhicule, ledit actionneur (1) comprend un moteur électrique (20) pourvu de bobines statoriques, d'un rotor et d'un arbre de sortie (23) lié au rotor et s'étendant selon un axe X, un mécanisme réducteur (70) ayant un élément de sortie de couple (31) rotatif de manière à pouvoir tourner entre une position de verrouillage et une position de libération, ledit mécanisme réducteur (70) étant cinématiquement lié à l'arbre de sortie (23) du moteur électrique (20), le moteur électrique (20) est de type à courant continu sans balais, l'actionneur (1) comprend une première carte électronique (50) et une seconde carte électronique (40), ladite seconde carte électronique (40) comprend un dispositif de détermination de la position du rotor du moteur électrique (20), **caractérisé en ce que** la première carte électronique (50) s'étend dans un plan P1 sensiblement parallèle à l'axe X et la seconde carte électronique (40) s'étend dans un plan P2 sensiblement perpendiculaire à l'axe X.

2. Actionneur (1) selon la revendication 1, **caractérisé en ce que** la première carte électronique (50) et la seconde carte électronique (40) sont reliées électriquement par l'intermédiaire d'un élément de connexion (60) en forme de « L ».

3. Actionneur (1) selon l'une des revendications précédentes, **caractérisé en ce qu'**au moins un aimant multi-pôles (21) est fixé sur l'arbre de sortie (23) du moteur électrique (20) et **en ce que** le dispositif de détermination de la position du rotor du moteur électrique (20) de seconde carte électronique (40) comprend au moins un capteur de phase (41, 42, 43) situé au regard de l'aimant multi-pôles (21) afin d'assurer la commutation électronique de l'alimentation des bobines statoriques du moteur électrique (20).

4. Actionneur (1) selon l'une des revendications précédentes, **caractérisé en ce que** la première carte électronique (50) comprend un capteur de position (52) au regard de l'élément de sortie de couple (31) afin de déterminer sa position angulaire.

5. Actionneur (1) selon l'une des revendications précédentes, **caractérisé en ce que** la seconde carte électronique (40) comprend des broches d'alimentation (44, 45, 46), afin d'alimenter électriquement les bobines statoriques du moteur électrique (20).

6. Actionneur (1) selon l'une des revendications précédentes, **caractérisé en ce que** la seconde carte électronique (40) comprend une ouverture (47) au travers de laquelle passe l'arbre de sortie (23) du moteur électrique (20).

7. Actionneur (1) selon l'une des revendications précédentes, **caractérisé en ce que** le moteur électrique (20), l'arbre de sortie (23) du moteur électrique (20), le mécanisme réducteur (70), la première carte électronique (50) et la seconde carte électronique (40) sont logés dans un boîtier (10) monobloc.

8. Actionneur (1) selon la revendication précédente, **caractérisé en ce que** la première carte électronique (50) est fixée au boîtier (10) par l'intermédiaire de vis de fixation et **en ce que** la seconde carte électronique (40) est fixée au boîtier (10) par l'intermédiaire d'au moins une glissière (17) issue du boîtier (10).

9. Actionneur (1) selon la revendication 7 ou 8, **caractérisé en ce que** le boîtier (10) comprend un connecteur électrique (15) permettant de connecter électriquement la première carte électronique (50) et la seconde carte électronique (40) à une source d'alimentation électrique externe.

## Patentansprüche

1. Aktuator (1) für ein Parksperrsystem eines Fahrzeuggetriebes, wobei der Aktuator (1) einen Elektromotor (20) mit Statorspulen, einen Rotor und eine mit dem Rotor verbundene Abtriebswelle (23) umfasst, die sich entlang einer X-Achse erstreckt, einen Untersetzungsmechanismus (70) mit einem Drehmomentabtriebselement (31), das zwischen einer Verriegelungsposition und einer Freigabeposition drehbar ist, wobei der Untersetzungsmechanismus (70) kinematisch mit der Abtriebswelle (23) des Elektromotors (20) verbunden ist, der Elektromotor (20) ein bürstenloser Gleichstrommotor ist, der Aktuator (1) eine erste Elektronikkarte (50) und eine zweite Elektronikkarte (40) umfasst, wobei die zweite Elektronikkarte (40) eine Vorrichtung zur Bestimmung der Position des Rotors des Elektromotors (20) umfasst, **dadurch gekennzeichnet, dass** sich die erste Elektronikkarte (50) in einer Ebene P1 erstreckt, die im Wesentlichen parallel zur X-Achse ist, und sich die zweite Elektronikkarte (40) in einer Ebene P2 erstreckt, die im Wesentlichen senkrecht zur X-Achse ist.

2. Aktuator (1) nach Anspruch 1, **dadurch gekennzeichnet, dass** die erste Elektronikkarte (50) und die zweite Elektronikkarte (40) über ein L-förmiges Verbindungselement (60) elektrisch miteinander verbunden sind.

3. Aktuator (1) nach einem der vorstehenden Ansprüche, **dadurch gekennzeichnet, dass** mindestens ein mehrpoliger Magnet (21) an der Abtriebswelle (23) des Elektromotors (20) befestigt ist und dass die Vorrichtung zur Bestimmung der Position des Rotors des Elektromotors (20) der zweiten elektronischen Karte (40) mindestens einen Phasensensor (41, 42, 43) umfasst, der gegenüber dem Mehrpolmagneten (21) angeordnet ist, um die elektronische Kommutierung der Stromversorgung der Statorspulen des Elektromotors (20) sicherzustellen.

4. Aktuator (1) nach einem der vorstehenden Ansprüche, **dadurch gekennzeichnet, dass** die erste Elektronikkarte (50) einen Positionssensor (52) gegenüber dem Drehmomentausgangselement (31) umfasst, um dessen Winkelposition zu bestimmen.

5. Aktuator (1) nach einem der vorstehenden Ansprüche, **dadurch gekennzeichnet, dass** die zweite Elektronikkarte (40) Versorgungsstifte (44, 45, 46) umfasst, um die Statorspulen des Elektromotors (20) elektrisch zu versorgen.

6. Aktuator (1) nach einem der vorstehenden Ansprüche, **dadurch gekennzeichnet, dass** die zweite Elektronikkarte (40) eine Öffnung (47) aufweist, durch die die Abtriebswelle (23) des Elektromotors (20) hindurchgeführt ist.

7. Aktuator (1) nach einem der vorstehenden Ansprüche, **dadurch gekennzeichnet, dass** der Elektromotor (20), die Abtriebswelle (23) des Elektromotors (20), das Untersetzungsgetriebe (70), die erste Elektronikkarte (50) und die zweite Elektronikkarte (40) in einem einteiligen Gehäuse (10) untergebracht sind.

8. Aktuator (1) nach dem vorstehenden Anspruch, **dadurch gekennzeichnet, dass** die erste Elektronikkarte (50) mit Befestigungsschrauben am Gehäuse (10) befestigt ist und dass die zweite Elektronikkarte (40) mit mindestens einer aus dem Gehäuse (10) herausragenden Führungsschiene (17) am Gehäuse (10) befestigt ist (10) hervorgeht.

9. Aktuator (1) gemäß Anspruch 7 oder 8, **dadurch gekennzeichnet, dass** das Gehäuse (10) einen elektrischen Steckverbinder (15) umfasst, der es ermöglicht, die erste elektronische Karte (50) und die zweite elektronische Karte (40) elektrisch mit einer externen Stromquelle zu verbinden.

## Claims

1. Actuator (1) for a parking lock system of a vehicle gearbox, said actuator (1) comprising an electric motor (20) provided with stator coils, a rotor, and an output shaft (23) linked to the rotor and extending along an X-axis, a reduction mechanism (70) having a torque output element (31) rotatable between a locking position and a release position, said reduction mechanism (70) being kinematically connected to the output shaft (23) of the electric motor (20), the electric motor (20) is a brushless DC type, the actuator (1) comprises a first electronic board (50) and a second electronic board (40), said second electronic board (40) comprises a device for determining the position of the rotor of the electric motor (20), **characterized in that** the first electronic board (50) extends in a plane P1 substantially parallel to the X-axis and the second electronic board (40) extends in a plane P2 substantially perpendicular to the X-axis.

2. Actuator (1) according to claim 1, **characterized in that** the first electronic board (50) and the second electronic board (40) are electrically connected via an L-shaped connection element (60).

3. Actuator (1) according to one of the preceding claims, **characterized in that** at least one multi-pole magnet (21) is fixed to the output shaft (23) of the electric motor (20) and **in that** the device for determining the position of the rotor of the electric motor (20) of the second electronic board (40) comprises at least one phase sensor (41, 42, 43) located opposite the multi-pole magnet (21) in order to ensure the electronic commutation of the power supply to the stator coils of the electric motor (20).

4. Actuator (1) according to one of the preceding claims, **characterized in that** the first electronic board (50) comprises a position sensor (52) opposite the torque output element (31) in order to determine its angular position.

5. Actuator (1) according to one of the preceding claims, **characterized in that** the second electronic board (40) comprises power supply pins (44, 45, 46) for electrically powering the stator coils of the electric motor (20).

6. Actuator (1) according to one of the preceding claims, **characterized in that** the second electronic board (40) comprises an opening (47) through which the output shaft (23) of the electric motor (20) passes.

7. Actuator (1) according to one of the preceding claims, **characterized in that** the electric motor (20), the output shaft (23) of the electric motor (20), the reduction mechanism (70), the first electronic board (50) and the second electronic board (40) are housed in a single-piece housing (10).

8. Actuator (1) according to the preceding claim, **characterized in that** the first electronic board (50) is attached to the housing (10) by means of fixing screws and **in that** the second electronic board (40) is attached to the housing (10) by means of at least one slide (17) extending from the housing (10).

9. Actuator (1) according to claim 7 or 8, **characterized in that** the housing (10) comprises an electrical connector (15) for electrically connecting the first electronic board (50) and the second electronic board (40) to an external power supply.
